(19) Europäisches Patentamt
European Patent Office
Office européen des brevets

(11) **EP 1 933 253 B1**

(12) **EUROPEAN PATENT SPECIFICATION**

(45) Date of publication and mention
of the grant of the patent:
**11.12.2013 Bulletin 2013/50**

(51) Int Cl.:
***G06K 7/10*** *(2006.01)*

(21) Application number: **07254093.3**

(22) Date of filing: **16.10.2007**

(54) **Method, system, and apparatus for an electronic freeze frame shutter for a high pass-by image scanner**

Verfahren, System und Vorrichtung für eine elektronische Bildeinfrier-Rahmenblende für einen Bildscanner mit hohem Durchsatz

Procédé, système, et appareil pour volet d'image gelée électronique pour un scanner d'image à forte déviation

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **14.12.2006 US 610568**

(43) Date of publication of application:
**18.06.2008 Bulletin 2008/25**

(73) Proprietor: **NCR Corporation**
**Duluth, GA 30096 (US)**

(72) Inventor: **Kwan, Sik Piu**
**Suwanee, GA 30024 (US)**

(74) Representative: **MacLeod, Roderick William et al**
**NCR Limited**
**Architecture & Technology**
**Discovery Centre**
**3 Fulton Road**
**Dundee DD2 4SW (GB)**

(56) References cited:
**EP-A- 1 152 472       GB-A- 2 425 362**
**US-A1- 2006 164 541    US-A1- 2006 202 038**
**US-A1- 2006 274 171**

**Description**

The apparatus described herein relates generally to reading optical codes using an image scanning device with a electronic freeze frame shutter.

An image scanning device reads an optical code by capturing and processing one or more electronic photographs of the optical code. At least one of the captured photographs must contain an image of the optical code and the image must have sufficient clarity for the image scanning device to detect and read the optical code. Optical codes are generally presented to the image scanning device as a static or slow moving object. The image scanning device captures electronic photographs of the optical codes using an image capture device. Low cost image capture devices are implemented using a complementary metal oxide semiconductor (CMOS) sensor. The CMOS sensor (also referred to as an imaging sensor because it captures a photograph or image) contains a two dimensional array of light sensitive areas (each area representing a pixel) used to capture an image. Integrated into the CMOS sensor is an electronic shutter that controls the exposure of the light sensitive areas. Current image scanning devices use an electronic shutter based on a rolling shutter exposure method that exposes and reads a single row of pixels at a time to create the photograph. Because each row of the array is exposed at a different time, a fast moving object will move before an entire photograph can be captured. This causes the object to appear skewed and blurred in the photograph. Thus, an image scanning device that uses a rolling-shutter exposure method will function as long as the optical code is static or relatively slow moving. As the pass-by speed of the optical code increases, the captured image of the optical code in the photograph begins to skew and blur until the optical code cannot be read. US published patent application number US 2006/202038 discloses an optical code scanning device the uses a global shutter.

In accordance with one example, an image scanning system for reading an optical code is provided, the system comprising: a server computer adapted to store information associated with the optical code; a local computer in communication with the server computer; and an image scanning device in communication with the local computer, the device comprising: an image capture device for capturing an image of the optical code, the device comprising: a freeze frame electronic shutter that starts and stops the exposure of all pixels at the same time to freeze the motion of the optical code before capturing the image of the optical code.

Furthermore, the objects of the invention are achieved by a method in accordance with claim 1.

Embodiments of the present invention will now be described, by way of example, with reference to the accompanying drawings, in which:

Fig. 1 is an illustration of an image scanning system.

Fig. 2A and 2B illustrate how moment of a bar code effects the exposure time of an imaging sensor.

Fig. 3 is a high-level flow diagram illustrating an example method for scanning an optical code using an image scanning device.

In the following description, numerous details are set forth to provide an understanding of the invention. However, it will be understood by those skilled in the art that the invention may be practiced without these details and that numerous variations or modifications from the described embodiments are possible.

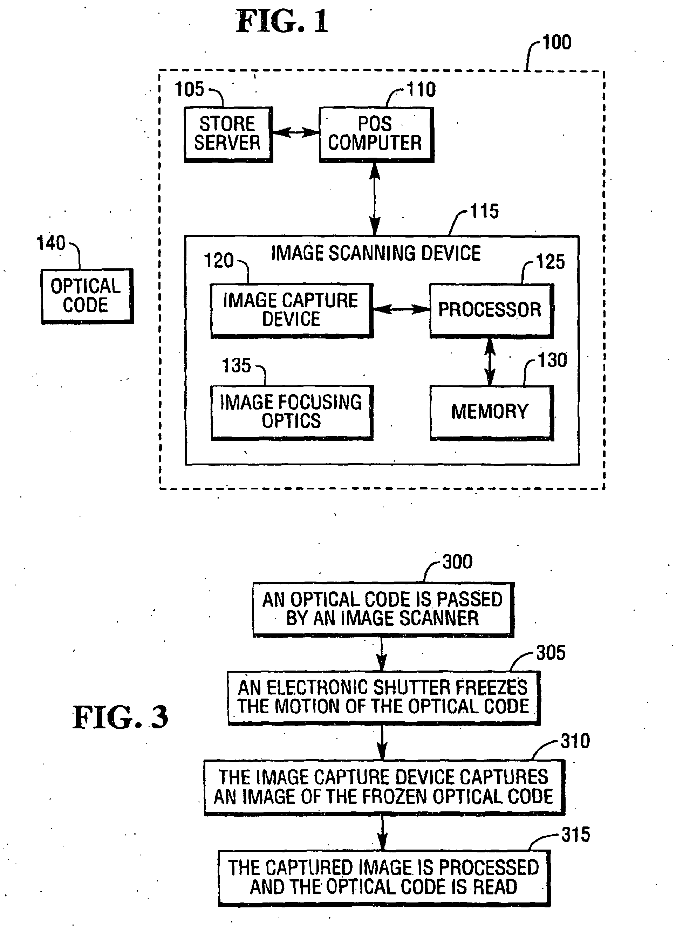

Turning to Fig. 1, there is provided an exemplary illustration of an image scanning system 100 used to scan (also referred to as reading) an optical code 140. The system 100 includes an image scanning device 115 for reading the optical code 140. In this illustration, the optical code 140 is a bar code. In other examples, the optical code 140 is a human readable or recognizable code, e.g., numbers, text, symbols, an icon, an image or combinations thereof. Once the image scanning device 1 15 reads the optical code 140, the information obtained from the optical code is sent to a point-of-sale (POS) computer 110 for additional processing. The POS computer 110 then sends the optical code information to a store server 105, which uses the information to access a database or other files stored on the server 105 or from files accessible by the server 105. The server 105 retrieves additional information related to the optical code (e.g., price, description, a photo, etc) from the database or files and sends it to the POS computer 110. The POS computer 110 then processes the information from the server 105 and presents information and/or instructions to a user as needed. In other examples, the database is divided across multiple servers, some of which may be located external to the store.

In some embodiments, optical codes are associated with items or services for sale. As optical codes are read during a transaction, the POS computer 110 maintains a total cost for all the items and services associated with the optical codes. In other illustrations, the image scanning device 115 captures an image of an optical code where the optical code includes a photograph. For example, this occurs when the optical code is part of a driver's license or other form of identification that also includes a photograph. When the optical code includes a photograph, the image scanning device 115 sends the captured image of the optical code (including the photograph) to the POS computer 110. The POS computer 110 forwards the captured image to store server 105 for storage. In some examples, the optical code with the photograph is transferred to a supervisory terminal for age verification and visual identification.

Continuing with Fig. 1, the image scanning device 115 includes a processor 125 that is connected to a memory 130. The memory 130 includes both non-volatile and volatile (sometimes referred to as dynamic) types of memory. The non-volatile memory is used to store programs and parameters that control the image scanning device 115. The contents of non-volatile memory are not lost when power is removed. Additionally, the processor 125 makes updates the contents of the non-volatile memory as needed. For example, during a software update operation, the POS computer 110 downloads a new or updated program to the image scanning device 115 and the processor 125 stores the program in non-volatile memory. Since the contents of volatile memory are lost when power is removed, the processor 125 only stores temporary or transitory data in this memory. The processor 125 executes the programs stored in the memory 130. The programs direct the processor to control the operations and functions of the image scanning device 115.

The image scanning device 115 also contains an image capture device 120 for capturing, under processor 125 control, electronic images. The image capture device 120 is implemented using a CMOS sensor. The sensor has a plurality of light sensitive areas. Each light sensitive area provides information for a single pixel of an electronic image. The light sensitive areas are arranged as a two dimensional array of rows and columns. Each light sensitive area converts incoming light photons to an electric charge that is amplified by circuitry built into the sensor and read one row at a time. The magnitude of the electric charge is proportional to the number of photons received during a period of time. The period of time is referred to as the exposure time or period. Resetting the circuitry controlling a light sensitive area (one pixel) causes the electric charge for that area to be reset and that restarts the exposure time. All the circuitry corresponding to light sensitive areas for a given row can be reset at the same time or all circuitry for the entire sensor can be reset at the same. The resolution of a sensor is determined by the total number of pixels supported by the sensor. A sensor with a pixel array having 1280 columns and 1024 rows has a resolution of 1.3 megapixels.

The image scanning device 115 has image focusing optics 135 that focus an image onto the image capture device 120. The image focusing optics 135 include one or more lenses to focus an optical image onto the image capture device 120. In some embodiments, the image focusing optics 135 use concave/convex mirrors to focus the optical image. In some embodiments, the image focusing optics 135 focus and direct, in a sequential process, a plurality of images to the image capture device 120. This allows the image capture device 120 to view an object from more than one direction and increases the probability of capturing and reading an optical code with one pass.

The time required to read a frame (the entire pixel array) of a sensor is quite long. For example, in a 3 megapixel sensor, it takes about 83 milliseconds (msec) to read the entire frame. If the same 3 megapixel sensor is organized to have 1024 rows, it will take 81 microseconds ($\mu$sec) to read each of the rows. If all rows are reset (which also starts the exposure time) at the same time and then each row is read, the first row read will have an exposure time of 81 $\mu$sec while the last row read will have an exposure time of 83 milliseconds. The large difference in exposure times between the first and last row read causes the resulting image to have unacceptably poor quality. One attempt to solve the problem is to reset each row just prior to reading the row. This exposure method is called an electronic rolling shutter method. It resets a row, which starts the exposure period, and then reads the row after the exposure period has elapsed. This method rolls through the array performing this operation on each row until the entire array has been read. This results in all rows of an array having the same exposure period, which improves the exposure quality of the image. However, because of the relatively long time required to read the entire array, the exposure period for the first row starts almost 83 milliseconds prior to the start of the exposure period for the last row, thus causing fast moving objects to appear skewed and blurred. This method has improved image quality as long as objects are stationary or slow moving but as the speed of an object increases, the captured image of the object becomes skewed and blurred to a point where the object cannot be detected.

In the above example, the CMOS sensor, using the rolling shutter exposure method, has the ability to reset the circuitry that controls each pixel, which restarts the exposure period for that pixel. However, the sensor does not have the ability to stop the exposure period and freeze or hold the value of the electric charge until it is read. The electric charge for a pixel can be read at any time but the exposure period for the pixel continues (the value of the electric charge could change) until the circuitry controlling the pixel is reset. Resetting the circuitry resets the electric charge to zero and restarts the exposure period for the pixel.

A CMOS sensor, implementing a freeze frame or stop action electronic shutter, has the above described circuitry to reset and start the exposure period for each pixel or light sensitive area of the sensor but the sensor also has additional circuitry that stops the exposure period for each pixel and freezes the value of the electric charge for each pixel. The frozen value of the electric charge is stored and can be read at a later time. (The processor 125 reads the frozen value for the electric charge for each pixel to create or capture an image.) Additionally, the freeze frame shutter starts and stops the exposure period for all pixels (all rows) at the time. This causes all pixels of the sensor to not only have the same length of exposure but to also have the same start and stop times for the exposure period. This eliminates the skewing and blurring caused by the rolling shutter exposure method and allows for the successful reading of optical codes with high pass-by speeds.

The processor 125 controls the functions of the CMOS sensor, including the start and stop times for the exposure period. This allows the processor to make real-time adjustments to the exposure period and to determine when to capture an image and how many images to capture per second. In some embodiment, where the focusing optics 135 direct, at different times, more than one image at the image capture device 120, the processor 125 times the capture of an image to when a new image is being directed at the image capture device 120. In other embodiments, the image scanning device 115 provides and controls a source of light to illuminate the optical code 140. The processor 125 determines both the exposure period and start time so as to capture an image of the optical code 140 during a time of maximum illumination.

Optical codes with high pass-by speeds become unreadable if the exposure time is set too long. The number of pixels in the sensor and the maximum pass-by speed of the optical code determine the maximum exposure period allowed to produce a readable image of the optical code. The pass-by speed of an optical code is the speed at which the optical code moves past an optical code scanner. A high pass-by image scanner is designed to read optical codes moving at speeds of 50 inches per second. If the optical code being read is a 5 thousandth of an inch (mil) bar code and the image capture device uses a sensor and optics that result in two pixels per bar in the bar code, the equation below determines the maximum exposure time to prevent unacceptable blurring of the bar code image and allow the code to be read. The equation also assumes the bar code will move one half the optical width of a pixel during the exposure period. The result for these settings is an exposure time of 25 μsec or less to capture an image of the bar code with sufficient clarity to be read. Other settings and assumptions are possible and will result in different exposure times. As shown above, the image

$$t_{exposure} = \frac{5\,mils}{1\,bar} \times \frac{1\,bar}{2\,pix} \times \frac{1}{2} \times \frac{1\,sec}{50\,inches} \times \frac{1\,inch}{1000\,mils} = 25\,\mu\,sec$$

scanner implemented with an electronic rolling shutter requires 83 milliseconds to capture an image which means an image of this example bar code is not readable due to the skewing and blurring that results from the movement of the bar code during the 83 msec exposure/capture time.

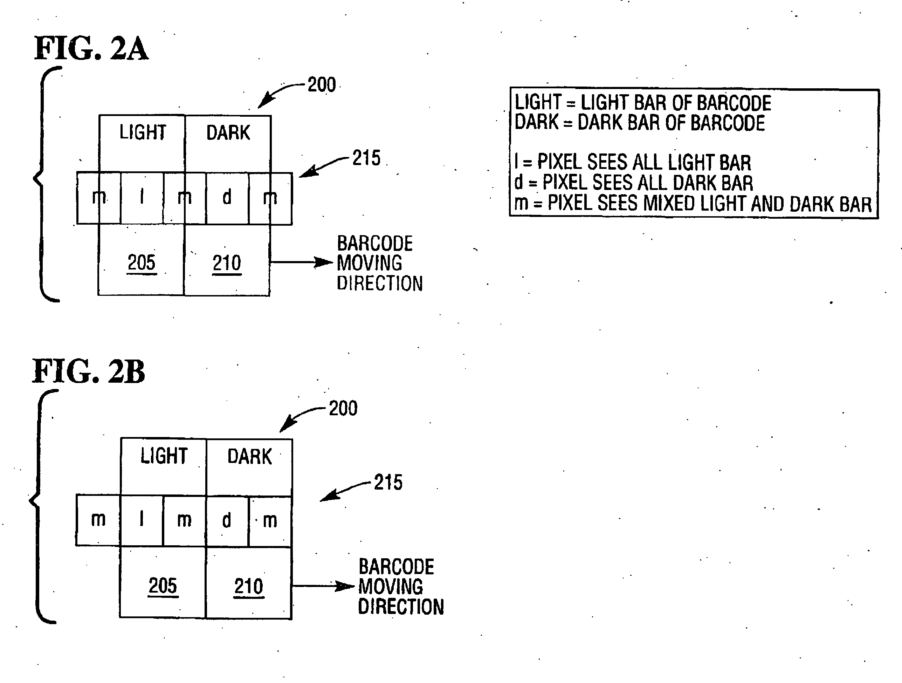

Fig. 2A and 2B illustrate the above equation and example. In Fig. 2A, the bar code 200 has a light bar labeled "Light" 205 and dark bar labeled "Dark" 210. An area of the bar code that is viewed by five pixels 215 is shown and each individual pixel area is labeled as "m", "1" or "d". A pixel labeled "1" has captured a light area of the bar code. A pixel labeled "d" has captured a dark area and a pixel labeled "m" is has captured part of a light and dark area. Fig. 2A represents the value of the five pixels just after the exposure time starts and Fig. 2B represents the value of the pixels as the exposure time ends and after the bar code has moved the optical distance of half a pixel. Figures 2A and 2B illustrate that if the exposure is equal to or less than the time needed to move the bar code a distance equal to half the optical width of a pixel, at least one pixel will correctly capture a light or dark value of each bar in the bar code, which will allow the bar code to be accurately read.

Fig. 3 is a high-level flow diagram illustrating an example method for scanning an optical code. In step 300, an optical code 140 is passed-by an image scanner 115 for scanning. In this embodiment, the optical code 140 is a bar code. In step 305, an electronic freeze frame shutter that is part of the image capture device 120 freezes the motion of the optical code as it passes by the image scanner. The electronic shutter uses a freeze frame exposure method where the exposure of all light sensitive areas of the CMOS sensor occurs at the same time. Starting and stopping the exposure of all light sensitive areas at the same time has the effect of freezing the motion of the any object in the captured image. In step 310, the image capture device captures an image of the frozen optical code. In step 315, the captured image is processed and the optical code is read.

While this embodiment uses an imaging sensor based on CMOS technology, other embodiments can use imaging sensors implemented with different technologies provided that it has an electronic shutter that implements the freeze frame exposure method. A charged coupled device or CCD is an example of another technology that can be used to implement an imaging sensor based on this method.

Although the disclosed invention has been described with particular reference to certain preferred embodiments thereof, variations and modifications of the disclosed invention can be effected within the scope of the following claims.

**Claims**

1.   A method comprising:

   providing an image scanning apparatus (115),
   said image scanning apparatus (115) comprising an image capture device (120),
   said image capture device (120) comprising

focusing optics (135) and a sensor,

said sensor comprising

a plurality of light sensitive areas arranged in an array of rows and columns, each light sensitive area adapted for providing information for a single pixel of an electronic image, and

a freeze frame electronic shutter adapted to start and stop the exposure of the light sensitive areas of said sensor at the same time, the time between start and stop defining the exposure period $t_{exposure}$; and

providing a barcode (140) that moves in a direction parallel to the rows of said light sensitive areas;

**characterised by**:

determining the speed of the barcode (140) in said direction;

determining the width of the narrowest bar of said barcode (140);

setting said focusing optics (135) to image said barcode (140) on the light sensitive areas of the sensor such that the width of the narrowest bar in the resulting image on the sensor is equal to the width of the two light sensitive areas; and

setting $t_{exposure}$ equal to

$$\text{(width of the narrowest bar)} \times (1/4) \times (1/\text{speed}) \text{ or less.}$$

2. The method of claim 1, wherein the image capture device (120) is implemented using a complementary metal oxide semiconductor.

3. The method of claim 1, wherein the image capture device (120) is implemented using a charged coupled device.

4. The method of claim 3, wherein the optical device (120) is further adapted to sequentially direct a plurality of images from different directions to the image capture device (120).

**Patentansprüche**

1. Verfahren, umfassend:

Bereitstellung eines Bildscannergerätes (115),

wobei das Bildscannergerät (115) eine

Bilderfassungseinrichtung (120) umfasst,

wobei die Bilderfassungseinrichtung (120) Fokussierungsoptik (135) und einen Sensor umfasst,

wobei der Sensor umfasst

eine Vielzahl von lichtempfindlichen Flächen, die in einer Anordnung von Reihen und Spalten angeordnet sind, wobei jede lichtempfindliche Fläche zur Bereitstellung von Information für einen einzelnen Pixel eines elektronischen Bildes angepasst ist, und

einen elektronischen Standbild-Verschluss, der angepasst ist,

die Belichtung der lichtempfindlichen Flächen des Sensors zur selben Zeit zu starten und zu stoppen, wobei die Zeit zwischen dem Start und dem Stop die Belichtungsperiode $t_{Belichtung}$ definiert; und

Bereitstellung eines Strichcodes (140), der sich in einer Richtung parallel zu den Reihen der lichtempfindlichen Flächen bewegt;

**gekennzeichnet durch**:

Bestimmung der Geschwindigkeit des Barcodes (140) in der Richtung;

Bestimmung der Breite des schmalsten Striches des Barcodes (140);

Einstellung der Fokussieroptik (135), um den Barcode (140) auf den lichtempfindlichen Flächen des Sensors derart abzubilden, dass die Breite des schmalsten Striches im sich ergebenden Bild auf dem Sensor gleich der Breite der zwei lichtempfindlichen Flächen ist; und

Einstellung von $t_{Belichtung}$ gleich (Breite des schmalsten Striches) x (1/4) x (1/Geschwindigkeit) oder geringer.

**2.** Verfahren gemäß Anspruch 1, wobei die Bildaufnahmeeinrichtung (120) unter Verwendung eines komplementären Metalloxid-Halbleiters implementiert ist.

**3.** Verfahren gemäß Anspruch 1, wobei die Bildaufnahmeeinrichtung (120) unter Verwendung einer Ladungsgekoppelten Einrichtung implementiert ist.

**4.** Verfahren gemäß Anspruch 3, wobei die optische Einrichtung (120) ferner angepasst ist, sequenziell eine Vielzahl von Bildern von verschiedenen Richtungen auf die Bildaufnahmeeinrichtung (120) zu richten.

**Revendications**

**1.** Procédé, dans lequel :

on se procure un dispositif (115) de balayage d'image,
le dispositif (115) de balayage d'image comprenant un appareil (120) d'acquisition d'image,
ce dispositif (120) d'acquisition d'image comprenant une optique (135) de focalisation et un capteur,
le capteur comprenant
une pluralité de zones sensibles à la lumière disposées suivant une matrice de lignes et de colonnes, chaque zone sensible à la lumière étant conçue pour fournir de l'information pour un pixel unique d'une image électronique, et
un obturateur électronique d'arrêt sur image pour faire débuter et arrêter l'exposition des zones sensibles à la lumière du capteur en même temps, la durée entre le début et l'arrêt définissant la durée $t_{exposure}$ ; et
on se procure un code barre (140) qui se déplace dans une direction parallèle aux rangées des zones sensibles à la lumière ;
**caractérisé en ce que** :

on détermine la vitesse du code barre (140) dans ladite direction ;
on détermine la largeur de la barre la plus étroite du code barre (140) ;
on règle l'optique (135) de focalisation pour obtenir une image du code barre (140) sur les zones sensibles du capteur, de manière à ce que la largeur de la barre la plus étroite dans l'image obtenue sur le capteur soit égale à la largeur des deux zones sensibles à la lumière ; et
on fixe $t_{exposure}$ inférieure ou égale à

```
(largeur    de    la    barre    la    plus
étroite)×(1/4)×(1/vitesse).
```

**2.** Procédé suivant la revendication 1, dans lequel on met en oeuvre l'appareil (120) d'acquisition d'image en utilisant un semiconducteur complémentaire métal oxyde.

**3.** Procédé suivant la revendication 1, dans lequel on met en oeuvre l'appareil (120) d'acquisition d'image en utilisant un dispositif à couplage de charge.

**4.** Procédé suivant la revendication 3, dans lequel le dispositif (120) optique est conçu, en outre, pour diriger séquentiellement une pluralité d'images provenant de directions différentes sur l'appareil (120) d'acquisition d'image.

# FIG. 1

100

```
┌─ ─ ─ ─ ─ ─ ─ ─ ─ ─ ─ ─ ─ ─ ─ ─ ─ ─ ─ ─ ─ ─ ─ ─ ─ ┐
```

105           110

| STORE SERVER | ⟷ | POS COMPUTER |

140

115

| OPTICAL CODE |

IMAGE SCANNING DEVICE

120           125

| IMAGE CAPTURE DEVICE | ⟷ | PROCESSOR |

135           130

| IMAGE FOCUSING OPTICS | | MEMORY |

---

300

| AN OPTICAL CODE IS PASSED BY AN IMAGE SCANNER |

305

| AN ELECTRONIC SHUTTER FREEZES THE MOTION OF THE OPTICAL CODE |

# FIG. 3

310

| THE IMAGE CAPTURE DEVICE CAPTURES AN IMAGE OF THE FROZEN OPTICAL CODE |

315

| THE CAPTURED IMAGE IS PROCESSED AND THE OPTICAL CODE IS READ |

# FIG. 2A

```
                            ← 200

      ┌──────────┬──────────┐
      │  LIGHT   │   DARK   │
   ┌──┼────┬─────┼────┬─────┼──┐
   │ m│  l │  m  │ d  │  m  │  │  ← 215
   └──┼────┴─────┼────┴─────┼──┘
      │   205    │   210    │ ──→ BARCODE
      │          │          │     MOVING
      └──────────┴──────────┘     DIRECTION
```

┌─────────────────────────────────────────────┐
│ LIGHT = LIGHT BAR OF BARCODE                  │
│ DARK = DARK BAR OF BARCODE                    │
│                                               │
│ l = PIXEL SEES ALL LIGHT BAR                  │
│ d = PIXEL SEES ALL DARK BAR                   │
│ m = PIXEL SEES MIXED LIGHT AND DARK BAR       │
└─────────────────────────────────────────────┘

# FIG. 2B

```
                            ← 200

      ┌──────────┬──────────┐
      │  LIGHT   │   DARK   │
   ┌──┼────┬─────┼────┬─────┼──┐
   │ m│  l │  m  │ d  │  m  │  │  ← 215
   └──┼────┴─────┼────┴─────┼──┘
      │   205    │   210    │ ──→ BARCODE
      │          │          │     MOVING
      └──────────┴──────────┘     DIRECTION
```

EP 1 933 253 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006202038 A